# EUROPEAN PATENT APPLICATION

(11) **EP 4 270 136 A1**
(43) Date of publication of application: **01.11.2023**
(21) Application number: 23161651.7
(22) Date of filing: 14.03.2023
(51) Int. Cl.: G05D 1/02, G01C 21/00

(54) **SMART MOWING SYSTEM**

(30) Priority: 27.04.2022 CN 202210452257
(71) Applicant: Nanjing Chervon Industry Co., Ltd., Nanjing, Jiangsu 211106 (CN)
(72) Inventor: CHEN, Si, Nanjing, Jiangsu, 211106 (CN)
(74) Representative: Sun, Yiming

(57) **Abstract**

Provided are a smart mowing system and a self-moving apparatus. The system includes a working area defined by a boundary and a smart mowing apparatus operating in the working area. The system further includes: a positioning module configured to acquire positioning coordinates of the smart mowing apparatus; a mapping module configured to make an area map including the working area; a marking device disposed on the boundary or in the working area; a coordinate estimation module configured to estimate approximately real coordinates of the smart mowing apparatus on the area map when the distance between the smart mowing apparatus and the marking device is less than or equal to a set value to obtain a coordinate pair set including the positioning coordinates and the approximately real coordinates; and a positioning correction module configured to determine a coordinate correction amount according to the coordinate pair set and correct the positioning coordinates of the smart mowing apparatus in operation by using the coordinate correction amount to obtain real coordinates.

## Description

### TECHNICAL FIELD

The present application relates to the field of smart working machines and, in particular, to a smart mowing system and a self-moving apparatus.

### BACKGROUND

With the development of mobile robot technology, more and more robots have entered people's daily life in recent years. As a self-moving apparatus, a smart mowing robot which can automatically mow grass, be autonomously recharged, and autonomously avoid obstacles in a user's lawn also gradually becomes popular. The smart mowing robot can liberate users from heavy and boring housework such as cleaning and maintaining lawns and is more and more favored by the users. The positioning accuracy of the smart mowing robot, as a self-moving smart robot, determines the work performance of the apparatus.

### SUMMARY

An object of the present application is to provide a smart mower capable of performing positioning correction to ensure positioning accuracy.

To achieve the preceding object, the present application adopts the technical solutions described below.

A smart mowing system includes a boundary defining a working area; a smart mowing apparatus operating in the working area; a positioning module configured to acquire positioning coordinates of the smart mowing apparatus; a mapping module configured to make an area map including the working area; a marking device disposed on the boundary or in the working area; a coordinate estimation module configured to estimate approximately real coordinates of the smart mowing apparatus on the area map when the distance between the smart mowing apparatus and the marking device is less than or equal to a set value to obtain a coordinate pair set including the positioning coordinates and the approximately real coordinates; and a positioning correction module configured to determine a coordinate correction amount according to the coordinate pair set and correct the positioning coordinates of the smart mowing apparatus in operation by using the coordinate correction amount to obtain real coordinates.

In an example, the area map includes map grids of the working area and map grids of the boundary; and the mapping module is capable of marking feature attributes on the map grids in a process of making the area map.

In an example, the coordinate estimation module includes: a coordinate acquisition unit configured to acquire the positioning coordinates of the smart mowing apparatus when the distance between the smart mowing apparatus and the marking device is less than or equal to the set value; a grid search unit configured to search for target map grids with a boundary attribute within a preset range from the positioning coordinates; a coordinate estimation unit configured to set weight values for the target map grids according to distances between the target map grids and the positioning coordinates and perform a weighted summation on the target map grids based on the weight values to obtain the approximately real coordinates; and a set generation unit configured to add the positioning coordinates and the approximately real coordinates as a pair of coordinates to the coordinate pair set.

In an example, the number of coordinate pairs in the coordinate pair set is greater than 1 and less than or equal to N, where N is a positive integer.

In an example, the coordinate estimation module continuously updates the coordinate pair set in an operation process of the smart mowing apparatus.

A self-moving apparatus is capable of operating in a working area defined by a boundary. The self-moving apparatus includes: a positioning module configured to acquire positioning coordinates of the self-moving apparatus; a mapping module configured to make an area map including the working area; a marking device disposed on the boundary or in the working area; a coordinate estimation module configured to estimate approximately real coordinates of the self-moving apparatus on the area map to obtain a coordinate pair set including the positioning coordinates and the approximately real coordinates; and a positioning correction module configured to determine a coordinate correction amount according to the coordinate pair set and correct the positioning coordinates of the self-moving apparatus in operation by using the coordinate correction amount to obtain real coordinates.

In an example, the coordinate estimation module is configured to estimate the approximately real coordinates of the self-moving apparatus on the area map when the distance between a smart mowing apparatus and the marking device is less than or equal to a set value to obtain the coordinate pair set.

In an example, the area map includes map grids of the working area and map grids of the boundary; and the mapping module is capable of marking feature attributes on the map grids in a process of making the area map.

In an example, the coordinate estimation module includes: a coordinate acquisition unit configured to acquire the positioning coordinates of the self-moving apparatus when the distance between the self-moving apparatus and the marking device is less than or equal to the set value; a grid search unit configured to search for target map grids with a boundary attribute within a preset range from the positioning coordinates; a coordinate estimation unit configured to set weight values for the target map grids according to distances between the target map grids and the positioning coordinates and perform a weighted summation on the target map grids based on the weight values to obtain the approximately real coordinates; and a set generation unit configured to add the positioning coordinates and the approximately real coordinates as a pair of coordinates to the coordinate pair set.

A positioning correction method applicable to a self-moving apparatus is provided, where the self-moving apparatus is capable of operating in a working area defined by a boundary, and a marking device is disposed on the boundary or in the working area. The method includes: acquiring positioning coordinates of the self-moving apparatus in an operation process; estimating approximately real coordinates of the self-moving apparatus on an area map when the distance between the self-moving apparatus and the marking device is less than or equal to a set value to obtain a coordinate pair set including the positioning coordinates and the approximately real coordinates; and determining a coordinate correction amount according to the coordinate pair set and correcting the positioning coordinates by using the coordinate correction amount to obtain real coordinates.

### BRIEF DESCRIPTION OF DRAWINGS

FIG. 1 is a schematic diagram of a working system of a smart mower as an example;
FIG. 2 is a schematic diagram showing that mowers are substantially on a boundary as an example;
FIG. 3 is a schematic diagram of a working system of a smart mower as an example;
FIG. 4 is a structural diagram of a coordinate estimation module as an example;
FIGS. 5 and 6 are schematic diagrams showing the determination of approximately real coordinates on a boundary as an example;
FIGS. 7 and 8 are schematic diagrams showing relationships between positioning coordinates and real coordinates as an example;
FIG. 9 is a schematic diagram showing the comparison of operation tracks of a mower before and after positioning correction as an example; and
FIG. 10 is a flowchart of the positioning correction of a self-moving apparatus as an example.

### DETAILED DESCRIPTION

The present application is described below in detail in conjunction with drawings and examples. It is to be understood that the examples described herein are intended to explain the present application and not to limit the present application. Additionally, it is to be noted that for ease of description, only part, not all, of structures related to the present application are illustrated in the drawings.

Technical solutions in the present application are applicable to apparatuses suitable for being unattended such as automatic cleaning apparatuses, automatic watering apparatuses, and automatic snow throwers in addition to smart mowing apparatuses. In addition, other types of self-moving apparatuses which can adopt the substance of the technical solutions disclosed below may fall within the scope of the present application. A smart mower is mainly described in the present application and hereinafter simply referred to as a mower. It is to be understood that different working accessories may be used for different self-moving apparatuses, and the different working accessories correspond to different action modes. In the smart mower of the present application, a working accessory is a cutting blade for cutting vegetation.

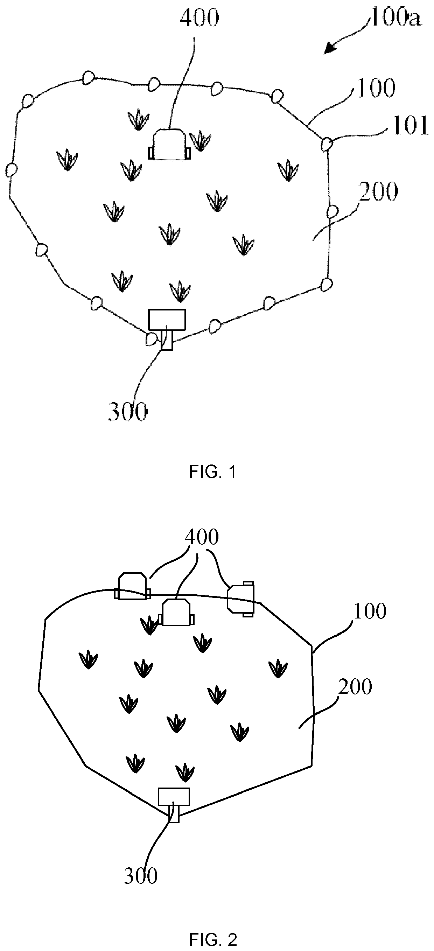

Referring to FIG. 1, a mowing system includes a boundary 100, a working area 200, a charging pile 300, and a mower 400. The charging pile 300 is used for parking the mower. Especially, when a power supply of the mower is insufficient, the charging pile 300 is used for supplementing energy. The charging pile 300 is typically disposed on the boundary 100 or in the working area 200. The boundary 100 is used for defining the working area 200 of the mower, and the boundary 100 is typically joined end to end to close the working area 200. In the present application, the working area may be an irregular closed pattern or a regular closed pattern. In an example, the boundary 100 may also be used for defining a non-working area, and the shape of the non-working area is related to the size, shape, and the like of an obstacle therein.

In an example, marking devices 101 may also be disposed on the boundary 100, where the marking devices 101 may be boundary sensors such as infrared sensors, radars, visual sensors, or radio-frequency identification (RFID) apparatuses. In an example, the boundary 100 may be a non-physical boundary formed by optical signals, electromagnetic signals, or other non-physical signals.

In an example, the marking devices 101 are further included in the mowing system. The marking devices 101 may be disposed on the boundary of the working area 200 and used for marking the boundary 100. The marking devices 101 may also be disposed in the working area 200, for example, the marking devices 101 may be disposed on the boundary of an obstacle 201 disposed in the working area 200 and used for marking the obstacle. The marking devices 101 may form a continuous non-physical boundary with non-physical substances which cannot be directly touched by a human body, such as optical signals, electrical signals, or a magnetic field. In an example, two adjacent marking devices 101 can detect the existence of each other, and any marking device 101 can detect a mower 400 whose distance from the marking device 101 is less than or equal to a set value. That is to say, a signal emitted by one marking device 101, such as an optical signal, an electrical signal, or a magnetic field, can be detected by a marking device 101 adjacent thereto, that is, the signal between the two marking devices 101 can form a continuous non-physical boundary. In addition, when the mower 400 travels on the boundary 100 or the distance of the mower 400 from the boundary 100 is less than or equal to the set value, it may be considered that the actual position of the mower 400 is substantially on the boundary 100. In an example, the set value may be 0.1 m, 0.2 m, 0.3 m, 0.4 m, 0.5 m, 0.6 m, 0.7 m, 0.8 m, 0.9 m, 1 m, or the like. For example, when the mower 400 is located at several positions shown in FIG. 2, it may be considered that the mower 400 is substantially on the boundary 100.

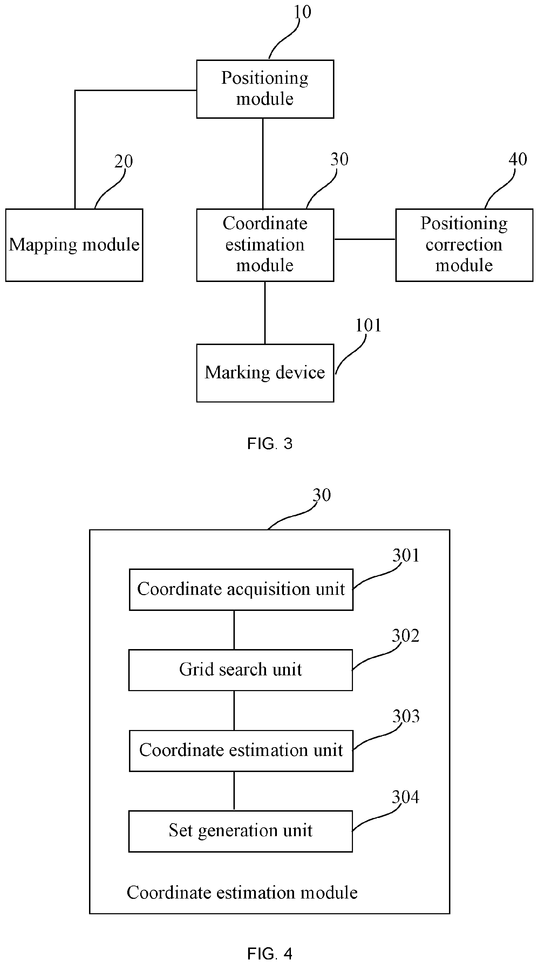

Referring to FIG. 3, the mowing system includes a positioning module 10, a mapping module 20, the marking device 101, a coordinate estimation module 30, and a positioning correction module 40. The positioning module 10 may be disposed on the mower 400 and used for acquiring positioning coordinates of the mower 400. In an example, other commonly used outdoor positioning technologies such as real-time kinematic (RTK) positioning technology, Global Positioning System (GPS) positioning technology, or ultra-wideband (UWB) positioning technology may be adopted for the positioning module 10. Correspondingly, when different positioning technologies are adopted for the positioning module 10, positioning units or positioning apparatuses included in the positioning module 10 are different, and the details are not described here. The mapping module 20 may be disposed in the mower 400 and can make an area map including at least the working area 200 or the boundary 100. In this example, the mapping module 20 may include a navigation unit, where in the process of the mower 400 travelling around the boundary 100, the navigation unit can record coordinates of the boundary so that the mapping module 20 can make, according to the recorded coordinates, the area map of the working area including the boundary 100. The manner in which the navigation unit records the coordinates in the mapping process is not limited in this example. For example, a user may hold the mapping module 20 by hand and walk around the boundary to record the coordinates, the mower is pushed by the user or controlled by another apparatus to travel along the boundary so that the coordinates are recorded, or the mapping module 20 is disposed on another working machine and records the coordinates when the working machine travels around the boundary.

In an example, in the process of making the area map, the mapping module 20 may assign different feature attributes to different map grids. For example, a boundary attribute is assigned to a map grid on the boundary 100, and an obstacle attribute is assigned to a map grid where the obstacle in the area is located. It is to be understood that the preceding boundary also includes a boundary for marking and surrounding the obstacle. The boundary around the obstacle and the boundary of the area map may be marked with the same marking device. In an example, after the mapping module 20 assigns the feature attributes to the different map grids, the mower 400 operating to a corresponding grid can change an operation route or state according to the feature attributes of the map grids. For example, when operating to the map grid whose feature attribute is the boundary attribute, the mower 400 may stop operating or travel along the boundary to correct the positioning accuracy of the mower and then travel along a preset path. Since the same marking device may be adopted for the boundary of the working area and the boundary of the obstacle in the working area to form the same boundary, the map grid having the boundary attribute may be a map grid on the boundary of the working area or a map grid on the boundary of the obstacle.

When the mower 400 is located on the boundary, the marking device 101 can more accurately identify whether the mower 400 is substantially located on the boundary. Therefore, actual position coordinates of the mower 400 when located on the boundary may be used for correcting the positioning coordinates obtained by the positioning module 10 through positioning so that the positioning accuracy of the mower is improved.

Although the marking device 101 on the boundary 100 can detect whether the mower 400 is substantially located on the boundary 100, the marking device 101 cannot determine the actual position coordinates of the mower 400. Therefore, when the mower 400 is substantially located on the boundary 100, approximately real coordinates of the mower 400 may be estimated and the positioning coordinates obtained by the positioning module 10 through positioning may be corrected according to the approximately real coordinates.

In an example, when the mower 400 is substantially located on the boundary 100, the marking device 101 can substantially determine whether the mower is on the boundary. When the marking device 101 detects that the mower 400 is on the boundary, that is, the distance between the mower 400 and the marking device 101 is less than or equal to the set value, the coordinate estimation module 30 may estimate the approximately real coordinates of the mower 400 on the area map. In this example, when the mower 400 is substantially on the boundary 100, the positioning module 10 may obtain the positioning coordinates. Therefore, each positioning coordinate corresponds to one approximately real coordinate. After the approximately real coordinates of the mower 400 are estimated, positioning coordinates and approximately real coordinates in each pair may be stored to a coordinate pair set. The coordinate pair set may include N pairs of positioning coordinates and approximately real coordinates, where N is a positive integer greater than or equal to 2.

The coordinate estimation module 30 may estimate real coordinates of the mower near or on the boundary 100 in various manners. In an example, the coordinate estimation module 30 may use the coordinates of the marking device 101 whose distance from the mower 400 is less than or equal to the set value in the area map as the approximately real coordinates.

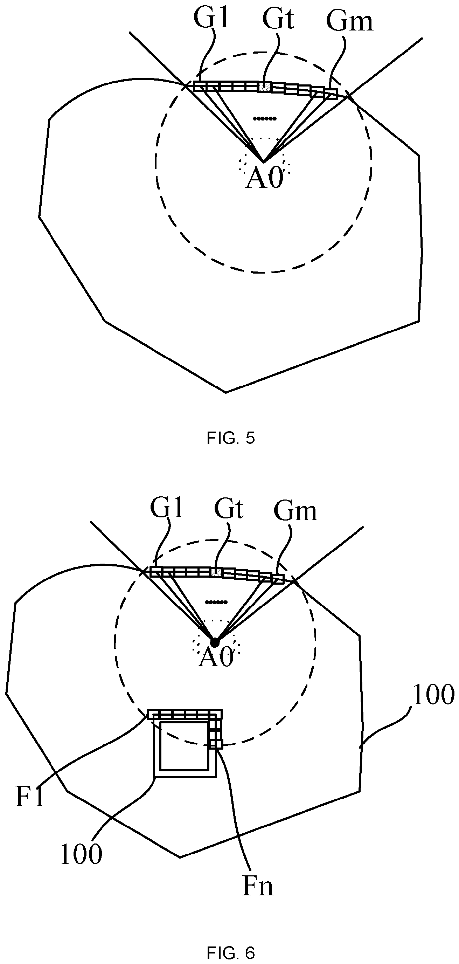

In an example, referring to FIG. 4, the coordinate estimation module 30 includes a coordinate acquisition unit 301, a grid search unit 302, a coordinate estimation unit 303, and a set generation unit 304. When the distance between the mower 400 and the marking device 101 is less than or equal to the set value, the coordinate acquisition unit 301 acquires the positioning coordinates obtained by the positioning module 10 in the mower 400 through positioning. The grid search unit 302 can search for target map grids with the boundary attribute within a preset range from the preceding positioning coordinates. Referring to FIG. 5, assuming that when the marking device 101 detects that the mower 400 is substantially located on the boundary, the positioning coordinates of the mower 400 are A0(x,y). In an example, referring to FIG. 5, the grid search unit 302 may use A0 as the center of a circle and search for all target map grids G1 ...Gm with the boundary attribute within the range of a radius R. Each target map grid has its respective coordinates in the area map. The coordinate estimation unit 303 may set a weight value Wᵢ for each target map grid according to the distance between the target map grid and the positioning coordinates A0, where i is greater than or equal to 1 and less than or equal to m. In an example, referring to FIG. 6, the target map grids searched for by the grid search unit 302 may further include target map grids F1...Fn on the boundary of the obstacle. That is to say, the target map grids may be those on the boundary of the area map, may be those on the boundary of the obstacle, or may include those on the boundary of the map area and those on the boundary of the obstacle. In an optional example, the coordinate estimation unit 303 may perform a weighted summation on all the target map grids based on the preceding weight value to determine a target map grid Gt which is most likely to have the approximately real coordinates and use the coordinates of the target map grid Gt as the approximately real coordinates.

The set generation unit 304 can add the positioning coordinates and the approximately real coordinates corresponding thereto as a pair of coordinates to the coordinate pair set. If there are already N coordinate pairs in the coordinate pair set, the latest coordinate pair may be added to the position of the first pair of coordinates in the coordinate pair set, and the coordinates originally at the position of the first pair of coordinates may be deleted. In some examples, the coordinate pair set may be updated with the most recently obtained coordinate pair in other manners.

When the coordinate estimation module 30 estimates the approximately real coordinates of the mower 400 substantially located on the boundary 100 and the N coordinate pairs exist in the coordinate pair set, the positioning correction module 40 may correct, according to the preceding coordinate pair set, the positioning coordinates acquired by the positioning module 10 to obtain the real coordinates of the mower 400. In an implementation, the positioning correction module 40 may determine a coordinate correction amount based on the preceding coordinate pair set and correct all positioning coordinates of the mower 400 in an operation process by using the coordinate correction amount. That is to say, when the marking device 101 detects that the mower 400 is substantially on the boundary 100, the positioning correction module 40 may correct the positioning coordinates of the positioning module 10 in the mower 400 once. In the whole working process, each time the mower 400 approaches the boundary 100 or is on the boundary 100, a positioning result is corrected once, thereby ensuring that the mower has relatively high positioning accuracy in the whole working process.

In an example, a loss function between the approximately real coordinates and the real coordinates may be designed, an objective is optimized so that the loss function is minimized, and the coordinate correction amount may be further obtained by a least squares method. Optionally, the coordinate correction amount plus the positioning coordinates is the real coordinates of the mower having the current positioning coordinates. For example, it is assumed that Po denotes the positioning coordinates, Pr denotes the approximately real coordinates, Pc denotes the real coordinates, and Vc denotes the coordinate correction amount. The loss function is defined as L, and L = Σ∥(P_{c} - Pᵣ)∥, where r is less than or equal to N, and N is the number of coordinate pairs in the coordinate pair set. A coordinate correction amount Vc for minimizing the loss function is calculated through the optimization of the objective, and then the coordinate correction amount Vc may be calculated by the least squares method, where *Vc*^{∗} = argmin Σ ∥ *P_{c}* - *Pᵣ* ∥. Further, the real coordinates P_{c} = F(Pₒ, *V*_{c}), where F is a correction function. Optionally, F may be a summation function.

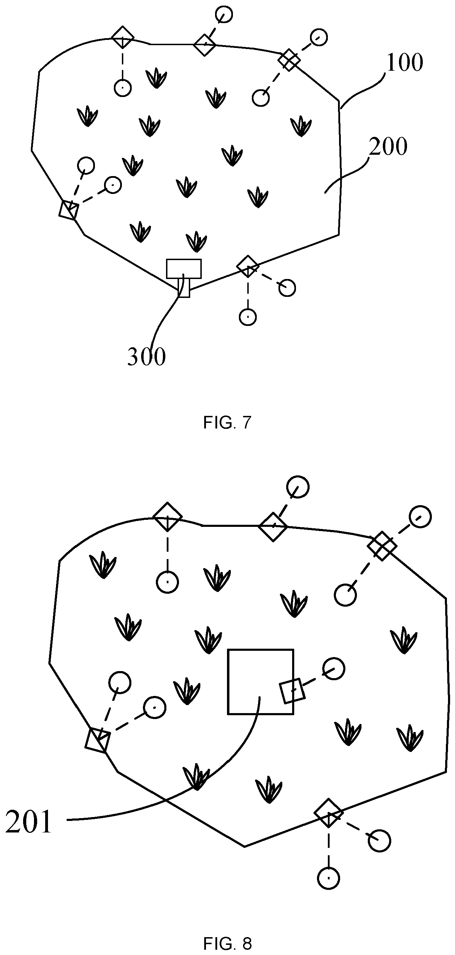

Referring to FIGS. 7 and 8, marks in the shape of "∘" in the figures denote points where the positioning coordinates of the mower 400 are located, and marks in the shape of "◇" in the figures denote points where the real coordinates of the mower 400 obtained through the preceding coordinate correction are located. It can be seen from the comparison of FIG. 7 and FIG. 8 that when the actual real coordinates of the mower 400 are on the boundary, the positioning coordinates obtained by the positioning module 10 in the mower 400 may be in or outside the working area. When the positioning coordinates of the mower 400 are different, the real coordinates of the mower 400 after correction may be the same.

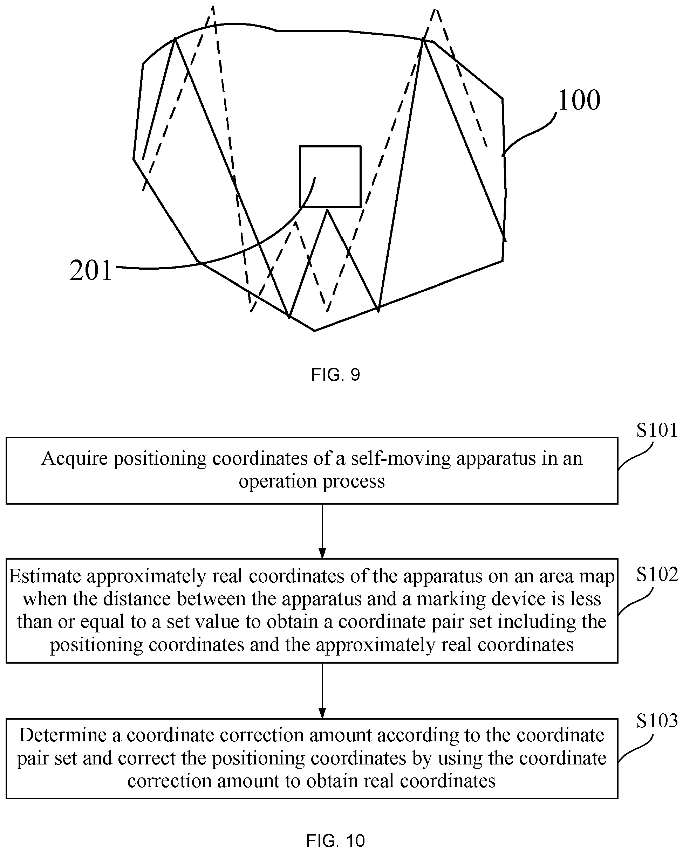

Referring to FIG. 9, a dashed line in the figure shows a possible travel track of the mower 400 when positioning correction is not performed on the mower, and a solid line in the figure shows a possible travel track of the mower in the working area after the positioning coordinates are corrected. It can be seen from the comparison of the two tracks in FIG. 9 that after the positioning correction, an operation track of the mower is substantially in the working area or on the boundary.

Referring to FIG. 10, in an example, the flowchart of a positioning correction method for a self-moving apparatus mainly includes the steps described below.

In S101, positioning coordinates of the self-moving apparatus in an operation process are acquired.

The self-moving apparatus may be the preceding mower, which can operate to mow or travel in a working area.

In S102, approximately real coordinates of the apparatus on an area map are estimated when the distance between the apparatus and a marking device is less than or equal to a set value so that a coordinate pair set including the positioning coordinates and the approximately real coordinates is obtained.

In S103, a coordinate correction amount is determined according to the coordinate pair set, and the positioning coordinates are corrected by using the coordinate correction amount so that real coordinates are obtained.

It is to be noted that the preceding are only preferred examples of the present application and the technical principles used therein. It is to be understood by those skilled in the art that the present application is not limited to the examples herein. For those skilled in the art, various apparent modifications, adaptations, and substitutions can be made without departing from the scope of the present application. Therefore, while the present application is described in detail through the preceding examples, the present application is not limited to the preceding examples and may include more other equivalent examples without departing from the concept of the present application. The scope of the present application is determined by the scope of the appended claims.

## Claims

1. A smart mowing system (100a), comprising:
a boundary (100) at least defining a working area (200);
a smart mowing apparatus (400) operating in the working area;
a positioning module (10) configured to acquire positioning coordinates of the smart mowing apparatus;
a mapping module (20) configured to make an area map comprising the working area;
a marking device (101) disposed on the boundary or in the working area;
a coordinate estimation module (30) configured to estimate approximately real coordinates of the smart mowing apparatus on the area map when a distance between the smart mowing apparatus and the marking device is less than or equal to a set value to obtain a coordinate pair set comprising the positioning coordinates and the approximately real coordinates; and
a positioning correction module (40) configured to determine a coordinate correction amount according to the coordinate pair set and correct the positioning coordinates of the smart mowing apparatus in operation by using the coordinate correction amount to obtain real coordinates.

2. The smart mowing system according to claim 1, wherein the area map comprises map grids of the working area and map grids of the boundary, and the mapping module is capable of marking feature attributes on the map grids in a process of making the area map.

3. The smart mowing system according to claim 2, wherein the coordinate estimation module comprises:
a coordinate acquisition unit (301) configured to acquire the positioning coordinates of the smart mowing apparatus when the distance between the smart mowing apparatus and the marking device is less than or equal to the set value;
a grid search unit (302) configured to search for target map grids with a boundary attribute within a preset range from the positioning coordinates;
a coordinate estimation unit (303) configured to set weight values for the target map grids according to distances between the target map grids and the positioning coordinates and perform a weighted summation on the target map grids based on the weight values to obtain the approximately real coordinates; and
a set generation unit (304) configured to add the positioning coordinates and the approximately real coordinates as a pair of coordinates to the coordinate pair set.

4. The smart mowing system according to claim 3, wherein a number of coordinate pairs in the coordinate pair set is greater than 1 and less than or equal to N, and N is a positive integer.

5. The smart mowing system according to claim 4, wherein the positive integer N is greater than or equal to 2.

6. The smart mowing system according to claim 3, wherein the coordinate estimation module continuously updates the coordinate pair set in an operation process of the smart mowing apparatus.

7. The smart mowing system according to claim 3, wherein the target map grids with the boundary attribute are the map grids on the boundary of the working area or the map grids on the boundary of an obstacle.

8. The smart mowing system according to claim 1, wherein the positioning correction module optimizes a loss function between the approximately real coordinates and the real coordinates to acquire the coordinate correction amount for causing the loss function to have a minimum value.

9. The smart mowing system according to claim 8, wherein the positioning correction module is configured to optimize the loss function by a least squares method.

10. The smart mowing system according to claim 1, wherein the marking devices are boundary sensors.

11. The smart mowing system according to claim 1, wherein the boundary is a non-physical boundary formed by optical signals, electromagnetic signals, or other non-physical signals.

12. The smart mowing system according to claim 1, wherein some of the marking devices are disposed the boundary of an obstacle.

13. A smart mowing system (100a), comprising a smart mowing apparatus (400) operating in a working area (200) defined by a boundary (100);
wherein the smart mowing system further comprises:
a positioning module (10) configured to acquire positioning coordinates of the smart mowing apparatus;
a mapping module (20) configured to make an area map comprising the working area;
a coordinate estimation module (30) configured to estimate approximately real coordinates of the smart mowing apparatus on the area map to obtain a coordinate pair set comprising the positioning coordinates and the approximately real coordinates; and
a positioning correction module configured to determine a coordinate correction amount according to the coordinate pair set and correct the positioning coordinates of the smart mowing apparatus in operation by using the coordinate correction amount to obtain real coordinates.

14. The smart mowing system according to claim 13, wherein the coordinate estimation module (40) is configured to estimate the approximately real coordinates of the smart mowing apparatus on the area map when a distance between the smart mowing apparatus and the boundary is less than or equal to a set value.

15. The smart mowing system according to claim 13, wherein the coordinate estimation module comprises:
a coordinate acquisition unit (301) configured to acquire the positioning coordinates of the smart mowing apparatus when a distance between the smart mowing apparatus and the boundary is less than or equal to a set value;
a grid search unit (302) configured to search for target map grids with a boundary attribute within a preset range from the positioning coordinates;
a coordinate estimation unit (303) configured to set weight values for the target map grids according to distances between the target map grids and the positioning coordinates and perform a weighted summation on the target map grids based on the weight values to obtain the approximately real coordinates; and
a set generation unit (304) configured to add the positioning coordinates and the approximately real coordinates as a pair of coordinates to the coordinate pair set.
